Europäisches Patentamt

European Patent Office

Office européen des brevets

(11) Veröffentlichungsnummer: **0 425 809 B1**

(12) **EUROPÄISCHE PATENTSCHRIFT**

(45) Veröffentlichungstag der Patentschrift: **09.03.94**

(21) Anmeldenummer: **90118153.7**

(22) Anmeldetag: **21.09.90**

(51) Int. Cl.5: **G01N 13/00**

(54) **Verfahren zum Bestimmen des Permeationsverhaltens.**

(30) Priorität: **06.10.89 DE 3933382**

(43) Veröffentlichungstag der Anmeldung:
**08.05.91 Patentblatt 91/19**

(45) Bekanntmachung des Hinweises auf die
Patenterteilung:
**09.03.94 Patentblatt 94/10**

(84) Benannte Vertragsstaaten:
**DE FR GB IT SE**

(56) Entgegenhaltungen:
**EP-A- 0 266 955**
**US-A- 3 170 319**
**US-A- 3 180 133**
**US-A- 3 181 346**

(73) Patentinhaber: **AUDI AG**

**D-85045 Ingolstadt(DE)**

(72) Erfinder: **Schäper, Siegfried, Dr.**
**Am Fort 5**
**D-8071 Wettstetten(DE)**
Erfinder: **Haldenwanger, Hans-Günther**
**Behaimstrasse 16a**
**D-8070 Ingolstadt(DE)**
Erfinder: **Kalus, Jürgen, Prof. Dr.**
**Spreestrasse 2**
**D-8580 Bayreuth(DE)**
Erfinder: **Winterkorn, Martin, Dr.**
**Klausnerweg 2**
**W-8071 Lenting(DE)**
Erfinder: **Kaul, Harald**
**Am Frankenstein 5**
**D-8570 Pegnitz(DE)**

(74) Vertreter: **Le Vrang, Klaus**
**AUDI AG,**
**Patentabteilung**
**D-85045 Ingolstadt (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# EP 0 425 809 B1

## Beschreibung

Die Erfindung bezieht sich auf ein Verfahren zur Bestimmung der Permeationseigenschaften von Fremdmolekülen.

Die Erfindung betrifft ein Verfahren zur Bestimmung der Permeationseigenschaften von Fremdmolekülen in Festkörpern. Zur Bestimmung der Permeation von Molekülen durch Festkörper sind viele Verfahren bekannt. Diese Verfahren beruhen darauf, daß gemessen wird, was durch den Festkörper hindurchdiffundiert. Die diffundierte Menge kann bestimmt werden durch Messung des Gewichtsverlustes der diffundierenden Substanz in einem geschlossenen Behälter vor und nach der Diffusion oder dadurch, daß man die herausdiffundierte Substanz auffängt und deren Menge bestimmt. Die erste Methode ist nicht sonderlich empfindlich, die zweite Methode bringt deutlich bessere Ergebnisse. Nachteilig jedoch ist beiden Methoden, daß sie sehr zeitraubend sind, da die Diffusion in den Festkörpern ein langsamer Prozeß ist und dementsprechend die Meßdauer mehrere Tage oder gar Wochen beträgt. Alternativen dazu bestehen darin, daß man als Festkörper eine dünne Membran benutzt und als diffundierende Substanz eine Substanz, die besonders schnell diffundiert. Ersteres jedoch bereitet oft Schwierigkeiten bei der Präparation, letzteres schränkt die Aussagekraft für die eigentlich interessierende diffundierende Substanz ein.

Aus der US-A 3,181,346 ist ein Verfahren zur Bestimmung der Gaspermeabilität eines Festkörpers bekannt. Dabei wird indirekt durch eine Druckdifferenzmessung die eindiffundierte Menge der Fremdmoleküle bestimmt.

Aus der EP-A 0 266 955 ist ebenfalls ein Verfahren zur Diffusionsmessung bekannt, bei dem die Permeabilität einer Materialprobe, die in der Wand einer Kammer mit einem Gassensor befestigt ist, mit Hilfe der Druckdifferenz bestimmt wird.

Aufgabe der Erfindung ist es, ein Verfahren zur Bestimmung der Permeationseigenschaften von Fremdmolekülen in Festkörpern zu schaffen, bei dem die Meßergebnisse eine hohe Aussagekraft besitzen und gleichzeitig schnell erzielbar sind.

Die Aufgabe wird gelöst durch ein Verfahren gemäß Anspruch 1. Anwendungsmöglichkeiten dieses Verfahrens sind in den Ansprüchen 7 und 10 beschrieben.

Erfindungsgemäß wird nicht mehr gewartet, bis die diffundierende Substanz durch den Festkörper hindurchdiffundiert ist, sondern es wird festgestellt, wieviel Substanz in einer gewissen Zeit in den Festkörper eindiffundiert ist.

Bevorzugte Ausführungsformen sind in den Unteransprüchen beschrieben, wobei in einer besonderen Ausgestaltung die eindiffundierende Substanz zur besseren Erfassung radioaktiv markiert wird und über die im Festkörper vorhandene Aktivität die eindiffundierte Menge bestimmt wird.

Im folgenden wird die Erfindung detailliert anhand eines Beispiels beschrieben. Es zeigen:

Fig. 1     eine schematische Skizze zur Erläuterung der Diffusion in einen einseitig benetzten, homogenen Festkörper;

Fig. 2     die schematische Darstellung zur Erläuterung der Diffusion in einen einseitig benetzten, zweischichtigen Festkörper; und

Fig. 3     eine apparative Anordnung.

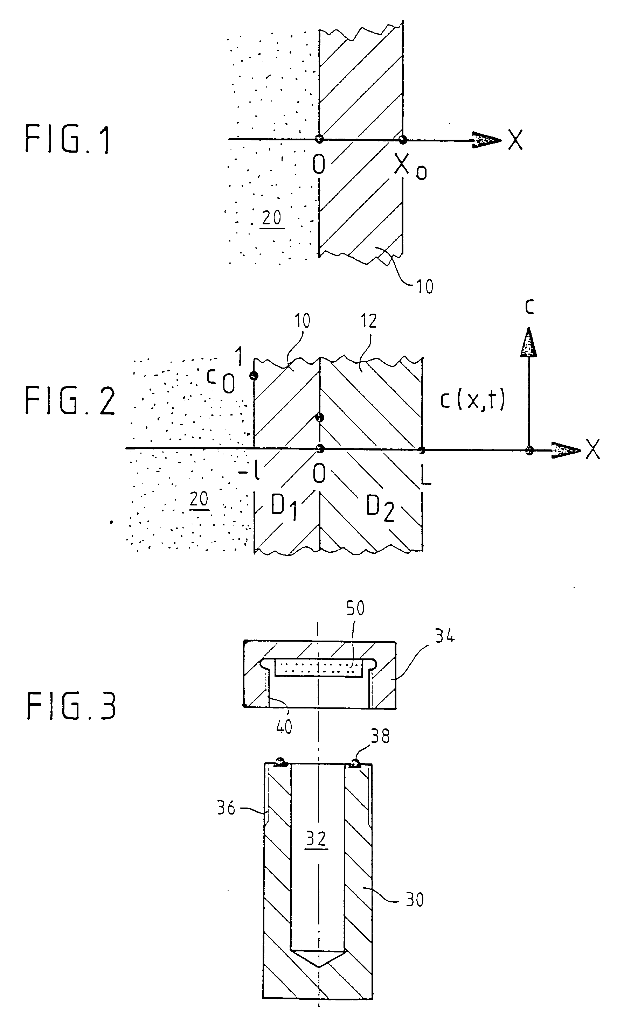

In Fig. 1 ist schematisch dargestellt ein Festkörper 10, hier gebildet durch die Wand eines Kunststoff-Kraftstoffbehälters. Zum besseren Verständnis der nachfolgend dargestellten Gesetzmäßigkeiten ist eine X-Achse senkrecht zur Wand gelegt, wobei der Nullpunkt auf der Oberfläche der benetzten Seite liegt, und die Wand dementsprechend die Dicke $x_0$ besitzt.

Einseitig ist die Wand durch Flüssigkeit, beispielsweise Benzin benetzt.

Das Meßprinzip soll am Beispiel der Diffusion von Inhaltsstoffen des Benzins in Kunststoffen beschrieben werden.

Die letztlich interessierende Größe ist der Diffusionsstrom durch den Festkörper bei stationärer Diffusion (mit der Randbedingung: eine Seite benetzt, andere Seite frei):

$$(1) \quad \frac{dn}{dt} = \frac{-D \cdot F \cdot c_0}{x_0}$$

wobei:

$\frac{dn}{dt}$ = Diffusionsstrom [Teilchen/s]

2

D = Diffusionskonstante [cm$^2$/s]

F = Fläche [cm$^2$]

$c_0$ = Konzentration der diffundierenden Substanz an der benetzten Seite im Festkörper [Teilchen/cm$^3$] und

$x_0$ = Dicke des Festkörpers [cm]

F und $x_0$ sind direkt zugängliche Größen, es bleibt die Bestimmung von $c_0$ und D. Meßmethoden, die die Menge an hindurchdiffundierender Substanz erfassen, erhalten letztlich aus (1) direkt das Produkt D • $c_0$. Bei der Erfassung von D und $c_0$ in kurzer Zeit kann nicht abgewartet werden, bis sich ein konstanter Diffusionsstrom durch den Festkörper einstellt. Man bestimmt stattdessen, wieviel Flüssigkeit vom Zeitpunkt des Benetzens t = 0 bis zu einer Zeit t, die in der Größenordnung von Minuten liegt, in den Festkörper eindiffundiert. Die Schwierigkeit liegt darin, von der eindiffundierten Stoffmenge auf D und $c_0$ zu schließen.

Für einen Festkörper, dessen Dicke bei der Diffusionszeit als unendlich angesetzt werden kann, läßt sich eine Gleichung für die eindiffundierte Stoffmenge S angeben:

Dabei gelten folgende Randbedingungen für die Konzentration der eindiffundierenden Substanz:

c (x) = 0 für t < 0

c (x = 0) = $c_0$ für t ≧ 0

Die interessierende Größe ist das Integral

$$S(t) = F \int_0^\infty c(x,t)\, dx.$$

Für genügend kleine Diffusionszeiten ergibt sich der Ausdruck

$$(2) \qquad S(t) = S \cdot F \cdot c_0 \cdot \sqrt{\frac{D \cdot t}{\pi}}$$

also ein Wurzelgesetz bezüglich der Eindiffusionszeit t.

Somit erhält man mit einer Messung der in kurzer Zeit eindiffundierten Flüssigkeitsmenge eine Information über die Größe $c_0$ • $\sqrt{D}$. Gewünscht ist jedoch, siehe eingangs, die Information über die Größe $c_0$ • D. Es ist also eine weitere Information notwendig. Eine Möglichkeit dazu ist, $c_0$ zusätzlich einzeln zu bestimmen.

Dementsprechend gliedert sich das Meßverfahren zur Bestimmung der Diffusionsparameter einer Flüssigkeit in einem homogenen Festkörper im wesentlichen in zwei Teile:

1. Bestimmung von $c_0$ • $\sqrt{D}$.

2. Bestimmung von $c_0$.

Dazu wird folgendermaßen vorgegangen: Die diffundierenden Flüssigkeiten werden radioaktiv markiert. Sie können dann mit hoher Empfindlichkeit detektiert werden. Die Inhaltstoffe des Benzins sind Kohlenwasserstoffe, die praktisch alle mit $14_c$ markiert gekauft werden können. $14_c$ ist ein Betastrahler mit einer mittleren Betaenergie von E = 47 keV und einer maximalen Betaenergie von $E_{max}$ = 156 keV. Diese Energie ist so gering, daß Detektoren, die für die Messung dieser Strahlung gedacht sind, Fenster mit einer Massenbelegung von < 1 mg/cm$^2$ haben sollen. Diffundieren $14_c$ markierte Substanzen in einen Festkörper ein, so wird schon bei sehr geringen Eindiffusionstiefen der Festkörper selbst zur Abschirmung: Es könnte daher nur die Radioaktivität an der Oberfläche detektiert werden. Deshalb ist es nötig, die eindiffundierte Flüssigkeit wieder aus dem Festkörper herauszulösen und dann die Aktivität der Lösung zu bestimmen. In der Praxis sieht das Verfahren zur Bestimmung von $c_0$ • $\sqrt{D}$ so aus:

**1. Herstellen einer Probe**

Eine Scheibe des zu untersuchenden Materials wird zurechtgeschnitten. Die Scheibe sollte dicker als 1 mm sein, damit bei kurzen Diffusionszeiten das Material als unendlich dick betrachtet werden kann. Die Fläche der Scheibe sollte größer als 0,5 cm$^2$ sein, damit Randeffekte das Ergebnis nicht zu sehr beeinflussen. Die Probenoberfläche sollte saüber sein und in die Probe sollte noch keine Flüssigkeit eindiffundiert sein. Die Probe ist als ggf. zu reinigen und zu trocknen.

**2. Diffusion**

Die Probe wird für die Diffusionszeit t in die radioaktiv markierte Flüssigkeit gegeben. Für die Messung ist eine Aktivität der Flüssigkeit von 1 Ci/ml völlig ausreichend. Geeignete Diffusionszeiten liegen zwischen 5 und 100 min. Es ist darauf zu achten, daß die Probe vollständig benetzt wird. Das Gefäß sollte nicht viel größer sein als die Probe, damit möglichst wenig radioaktive Flüssigkeit benötigt wird.

**3. Auswaschen**

Nach der Diffusion wird in einem mehrstufigen Waschprozeß das an der Oberfläche haftende Material von der Probe entfernt. Dies geschieht durch kurzes Eintauchen in nicht radioaktive Flüssigkeit. Die Waschzeit sollte sehr kurz gegenüber der Eindiffusionszeit sein, damit eindiffundierte Flüssigkeit aus dem Festkörper nicht ausgewaschen wird, dies soll im eigentlichen Auswaschvorgang geschehen. Der eigentliche Auswaschvorgang, bei dem die in den Festkörper eindiffundierte Flüssigkeit aus dem Festkörper herausgewaschen und einer Messung zugänglich gemacht wird, läuft wie folgt ab: Die Probe wird in ein Gefäß mit nicht markiertem Lösungsmittel gegeben. Die eindiffundierte Flüssigkeit muß sich in dem Lösungsmittel gut lösen. Das Lösungsmittelvolumen sollte mindestens doppelt so groß sein wie das Volumen der Probe. Die Auswaschzeit sollte viel (mindestens zehnmal) größer sein als die Eindiffusionszeit. Man kann dann davon ausgehen, daß zumindest der größte Teil der eindiffundierten Flüssigkeit wieder herausdiffundiert ist (und durch im wesentlichen unmarkiertes Lösungsmittel ersetzt ist).

**4.** Die Bestimmung der Betaaktivität erfolgt am einfachsten und am besten mit einem Szintillationszähler. Dazu muß die radioaktive Flüssigkeit mit einem Szintillator versetzt werden. Ein geeigneter Szintillationscocktail ist z. B. Rotiszintll (eingetragenes Warenzeichen), ein Szintillator auf Toluolbasis. Ist die eindiffundierte Flüssigkeit in dem Szintillationscocktail sehr gut löslich, kann der Szintillationscocktail auch zum Auswaschen verwendet werden.

**5. Auswertung**

Mit dem Zähler wird die Größe $S'(t) = S(t) A_{spez}$, wobei $A_{spez}$ die spezifische Aktivität der eindiffundierten Flüssigkeit (in cps/cm$^3$; cps = counts per second = 1/s) ist, bestimmt. Aus (2) erhält man dann:

$$(3) \quad c_0 \cdot \sqrt{D} = \frac{S'(t) \cdot \sqrt{\pi}}{2F \cdot A_{spez} \cdot \sqrt{t}}.$$

Die Bestimmung von $c_0$ erfolgt völlig analog, nur daß die Probe nun sehr dünn (Größenordnung 20 $\mu$m, am besten ein Mikrotomschnitt) und die Eindiffusionszeit relativ lange (ca. 1 Stunde) sein muß. Man kann dann davon ausgehen, daß sich in der Probe die Sättigungskonzentration $c_0$ eingestellt hat. Man erhält $c_0$ dann aus:

$$(4) \quad c_0 = \frac{S''}{V \cdot A_{spez}}$$

wobei V das Volumen der dünnen Probe ist (V kann bei bekannter Dichte der Probe am besten durch Wiegen bestimmt werden).

Aus (3) und (4) ergibt sich dann:

$$(5) \quad \sqrt{D} = \frac{\sqrt{\pi} \cdot V \cdot S'\ (t)}{2F \cdot S'' \cdot \sqrt{t}}$$

Wie in Verbindung mit Fig. 2 erläutert wird, ist das Verfahren auch geeignet, die Diffusionsparameter einer Flüssigkeit in einem zweischichtigen Festkörper zu bestimmen, wie er beispielsweise durch einen innenfluorierten oder innensulfonierten Kunststoff-Kraftstoffbehälter gebildet wird.

Falls bestimmte Voraussetzungen erfüllt sind, können auch für derartige Festkörper, bei denen zur Herabsetzung der Diffusion an der Oberfläche eine Behandlung oder Beschichtung vorgesehen ist, die relevanten Parameter bestimmt werden. Der Festkörper ist in seiner Schichtstruktur nach Fig. 2 aufgebaut, eine Schicht 10 stellt die Beschichtung dar, an der Innenseite, die benetzt ist, besitzt sie eine Sättigungskonzentration von $c_0^1$. Die Konzentration sinkt entlang des Querschnittes durch die Wandung ab. Als Nullpunkt in der X-Achse ist die Trennstelle zwischen Schicht 10 und Schicht 12 angegeben, die Schicht 10 als Beschichtung (sulfonierte oder fluorierte Schicht) besitzt eine Dicke von 1, die Festkörperschicht 12 besitzt eine Dicke von L.

Die für den genannten Anwendungsfall vorauszusetzenden Annahmen und Definitionen sind:

1. Die Schicht 10 besitzt im Bereich zwischen -I und 0 eine Diffusionskonstante $D_1$ und eine Konzentration $c_1 = c_1\ (x, t)$.

2. Die Schicht 12 besitzt im Bereich zwischen 0 und L eine Diffusionskonstante $D_2$ und eine Konzentration $c_2 = c_2\ (x, t)$.

3. L ist sehr viel größer als I, im Grenzfall gilt $L \rightarrow \infty$.

4. Es existiert kein Kontaktdiffusionswiderstand an der Grenzfläche bei $x = 0$.

5. Die Löslichkeit in der Substanz 2 ist größer als in der Substanz 1.

Damit ergeben sich folgende Randbedingungen:

$c_1\ (x, t) = c_2\ (x, t) = 0$ für $t < 0$

$c_1\ (-I, t) = c_0^1$ für $t > 0$

$c_1\ (0, t) = c_2\ (0, t)$ für $t > 0$

Für stationäre Diffusion ergibt sich dementsprechend für die pro Sekunde und $cm^2$ hindurchdiffundierte Stoffmenge $\frac{dn}{dt}$

$$(6) \quad \frac{dn}{dt} = \frac{c_0^1}{\dfrac{L}{D_2} + \dfrac{\ell}{D_1}}$$

Aus (6) ist zu ersehen, daß es bei Schichtstrukturen günstig ist, wenn $c_0^1$, also die Löslichkeitsgrenze der ersten Schicht, klein ist. Insbesondere vereinfacht sich (6) dann, wenn I sehr viel kleiner als L ist, was bei den Oberflächenbehandlungen der Fall ist, und wenn $D_1$ verglichen mit $D_2$ nicht abnorm klein ist:

$$(7) \quad \frac{dn}{dt} = \frac{c_0^1 \cdot D_2}{L}$$

woraus die Wichtigkeit der Löslichkeit $c_0^1$ klar zu ersehen ist. Es ist hier also auch nur eine Löslichkeit und eine Diffusionskonstante zu bestimmen. Die Größen sind aber nicht ganz so leicht zugänglich wie beim homogenen Festkörper.

Die Diffusionskonstante $D_2$ kann ganz analog zu D beim homogenen Festkörper bestimmt werden, nur daß hier darauf zu achten ist, daß bei der Eindiffusion nur die Oberfläche 2 benetzt wird und nur diese Fläche bei der Auswertung eingeht. Das Benetzen nur einer Fläche kann man erreichen, wenn man die Probe zwischen Deckel und Gefäß einer Flasche nach Fig. 3 einbaut.

Dazu ist ein zylindrisches Gefäß 30 aus Messing vorgesehen, das innen einen Hohlraum 32 besitzt und am oberen Ende offen ist. Am offenen Ende sind ein Außengewinde 36 vorgesehen, obenauf eine Dichtung, beispielsweise ein O-Ring 38.

Ein Deckel 34 kann auf das obere offene Ende aufgesetzt werden und besitzt ein Innengewinde 40, das mit dem Außengewinde 36 verschraubt wird. Der Deckel 34 ist beispielsweise aus Aluminium gefertigt.

Auf der Innenseite ist eine Probe 50 vorgesehen, die sich beim Aufschrauben des Deckels 34 auf das Gefäß 30 an die Stirnseite der Öffnung andrückt und mit dem O-Ring 38 abdichtet. Somit kann der in den Hohlraum 32 eingefüllte Inhalt nur einseitig mit der Probe 50 in Berührung kommen.

Das Reinigen und Auswaschen erfolgt, wie oben in Zusammenhang mit dem homogenen Festkörper beschrieben.

Die Sättigungskonzentration $c_0^1$ kann, da wegen der geringen Dicke L der Schicht 10 kein Mikrotomschnitt gemacht werden kann, nicht mit der oben beschriebenen Methode erhalten werden. Ist aber l genügend klein, so wird nach relativ kurzer Eindiffusionszeit $c_1$ ungefähr gleich $c_0^1$ werden. Ist dies der Fall, so erfolgt die weitere Diffusion in die Schicht 12 analog zu oben, aber mit der Randbedingung $c_2 (0, t) \approx c_0^1$.

Man erhält also für die Eindiffusion durch Benetzen nur von der Oberfläche der Schicht 10:

$$(8a) \quad S_1 \approx 2 \cdot F \cdot c_0^1 \cdot \left[ \sqrt{\frac{D_2 \cdot t}{\pi}} + \frac{l}{2} \right]$$

Und für das Eindiffundieren von der Oberfläche der Schicht 12 aus:

$$(8b) \quad S_2 \approx 2 \cdot F \cdot c_0^2 \cdot \sqrt{\frac{D_2 \cdot t}{\pi}}$$

Bei genügend langen Eindiffusionszeiten t wird

$$\sqrt{\frac{D_2 \cdot t}{\pi}} \gg \frac{l}{2}$$

Der Einfluß der dünnen Schicht 10 kann dann vernachlässigt werden. Bei gleichen Diffusionszeiten verhalten sich dann $S_1$ zu $S_2$ wie $c_0^1$ zu $c_0^2$. Durch eine Messung der von der Oberfläche von 10 eindiffundierten Menge kann man also $c_0^1$ aus:

$$(8) \quad c_0^1 = \frac{c_0^2 \cdot S_1 (t)}{S_2 (t)}$$

EP 0 425 809 B1

errechnen.

Durch die Erfindung wird ein Verfahren zur Bestimmung der Diffusionsparameter beschrieben, bei dem von der Herstellung der Probe bis zum Ergebnis etwa nur ein Tag vergeht, wobei die Handhabung und Probenpräparation sehr einfach ist. Die Menge der zu handhabenden Aktivität ist klein, typischerweise etwa $2\mu$Ci, und die eindiffundierte Aktivität ist sehr gering, nämlich $< 0,01\mu$Ci. Die Messungen sind in einem Isotopenlabor der Klasse C möglich, in dem eine Ausrüstung für $14_c$-Messungen vorhanden ist. Durch den kleinen apparativen Aufwand ist es möglich, mehrere Messungen problemlos parallel durchzuführen.

**Patentansprüche**

1. Verfahren zum Bestimmen des Permeationsverhaltens von Fremdmolekülen (20) in Festkörpern (10), indem man
   a) durch eine entsprechende Oberflächenberührung der Fremdmoleküle mit dem Festkörper ein Eindringen der Fremdmoleküle ermöglicht,
   b) eine Zeit t wählt, die so bemessen ist, daß die Fremdmoleküle nur eine Strecke x in den Festkörper eindiffundieren, die wesentlich kleiner ist als die gesamte Dicke des Festkörpers,
   c) den Diffusionsprozeß nach der Zeit t abbricht, und
   d) nur die eindiffundierte Menge der Fremdmoleküle bestimmt.

2. Verfahren nach Anspruch 1 zur Ermittlung des Diffusionsstromes entsprechend der Formel

$$\frac{dn}{dt} = \frac{-D \cdot F \cdot C_0}{x_0}$$

   wobei
   $\frac{dn}{dt}$ = Diffusionsstrom
   D = Diffusionskonstante
   F = Fläche
   $c_0$ = Konzentration der diffundierenden Substanz an der exponierten Seite des Festkörpers im Festkörper
   $x_0$ = Dicke des Festkörpers indem man folgende Größen bestimmt:
   a) Fläche des Festkörpers
   b) Dicke des Festkörpers
   c) Stoffmenge der eingedrungenen Substanz von Fremdmolekülen

3. Verfahren nach Anspruch 2, wobei die Bestimmung der Stoffmenge der eingedrungenen Substanz

$$S(t) = F \int_0^\infty c(x,t)\, dx$$

   für genügend kleine Diffusionszeiten nach der Beziehung

$$S(t) = 2F\, C_0 \sqrt{\frac{D \cdot t}{\pi}}$$

7

unter Bestimmung der Größen $c_o \cdot \sqrt{D}$ und $c_o$ zur Ermittlung der Größe $c_o \cdot D$ erfolgt, wobei c (x, t) die orts- und zeitabhängige Konzentration der diffundierenden Substanz ist.

4. Verfahren nach einem der Ansprüche 1 bis 3, wobei die Bestimmung von $c_o \cdot D$ erfolgt durch
   a) Bereitstellung eines Flächenelements des Festkörpers, das mit hinreichender Genauigkeit als unendlich dick angesehen werden kann,
   b) einen Kontakt der Fläche mit den Fremdmolekülen,
   c) Entfernen des Fremdmolekülstoffes von der Oberfläche nach einer vorgegebenen Zeit,
   d) Auswaschen des eindiffundierten Stoffes, und
   e) Bestimmen der eindiffundierten Stoffmenge.

5. Verfahren nach einem der Ansprüche 1 bis 4, wobei die Bestimmung von $c_o$ erfolgt durch
   a) Bereitstellung eines Flächenelements des Festkörpers, das ausreichend dünn ist, so daß nach kurzer Diffusionszeit eine Sättigung mit eindiffundierten Fremdmolekülen erfolgt ist,
   b) einen Kontakt der Fläche mit den Fremdmolekülen,
   c) Entfernen des Fremdmolekülstoffes von der Oberfläche nach einer vorgegebenen Zeit,
   d) Auswaschen des eindiffundierten Stoffes und
   e) Bestimmen der eindiffundierten Stoffmenge.

6. Verfahren nach Anspruch 4 und 5, wobei zur Bestimmung der Stoffmenge die Fremdmolekülsubstanz radioaktiv markiert wird und nach dem Auswaschen aus dem Festkörper die Aktivität bestimmt wird.

7. Anwendung des Verfahrens nach einem der Ansprüche 1 bis 6 zur Bestimmung der Diffusion von Kraftstoffmolekülen in und durch die Wandung eines Kunststoff-Kraftstoffbehälters, wobei als Fremdmoleküle $14_c$ markierte Benzinmoleküle verwendet werden.

8. Verfahren nach einem der Ansprüche 1 bis 6 zur Bestimmung der Diffusionsparameter in einem einseitig benetzten, zweischichtigen Fremdkörper, wobei die exponierte erste Schicht deutlich dünner ist als die nichtexponierte zweite Schicht und die Fremdmoleküle in der ersten Schicht eine geringere Löslichkeit besitzen als in der zweiten Schicht, durch
   a) Bestimmen der Diffusionskonstante der zweiten Schicht,
   b) Berechnen der Konzentration an der Oberfläche in der ersten Schicht,
   c) Bestimmen der Dicke der zweiten Schicht
nach der Formel

$$\frac{dn}{dt} = \frac{c_0^1 \cdot D_2}{L}$$

wobei
   $\frac{dn}{dt}$ : Diffusionsstrom
   $c_0^1$ : Konzentration an der Oberfläche der ersten Schicht im Festkörper
   $D_2$ : Diffusionskonstante zweite Schicht
   L : Dicke der zweiten Schicht

9. Verfahren nach Anspruch 8, wobei die Konzentration an der Oberfläche der ersten Schicht berechnet wird durch
   a) Ermittlung der von der Oberfläche der ersten Schicht aus eingedrungenen Stoffmenge,
   b) Ermittlung der von der Oberfläche der zweiten Schicht aus eingedrungenen Stoffmenge,

c) Berechnen der Konzentration an der Oberfläche der ersten Schicht nach der Formel

$$C_0^1 = \frac{C_0^2 \cdot S_1(t)}{S_2(t)}$$

wobei

$C_0^1$ = Konzentration an der Oberfläche der ersten Schicht im Festkörper
$C_0^2$ = Konzentration an der Oberfläche der zweiten Schicht im Festkörper
$S_1(t)$ = eingedrungene Menge an der Oberfläche der ersten Schicht
$S_2(t)$ = eingedrungene Menge an der Oberfläche der zweiten Schicht.

**10.** Anwendung des Verfahrens nach Anspruch 8 oder 9 zur Bestimmung der Diffusion von Kraftstoffmolekülen in und durch die Wandung eines innenbeschichteten, insbesondere eines fluorierten oder sulfonierten Kunststoff-Kraftstoffbehälters, wobei als Fremdmoleküle $14_c$ markierte Moleküle von Benzinbestandteilen verwendet werden.

## Claims

**1.** Method for analysing the permeation behaviour of foreign molecules (20) in solids (10), by
a) making it possible for the foreign molecules to penetrate the solid by appropriate surface contact between the foreign molecules and the solid,
b) selecting a time t of a length such that the foreign molecules only diffuse into the solid by a distance x which is far less than the overall thickness of the solid,
c) terminating the diffusion process after the time t, and
d) determining only the quantity of foreign molecules that have diffused into the solid.

**2.** Method according to claim 1 for ascertaining the diffusion current in accordance with the formula

$$\frac{dn}{dt} = \frac{-D \cdot F \cdot C_0}{x_0}$$

wherein
$\frac{dn}{dt}$ = diffusion current
$D$ = diffusion constant
$F$ = area
$c_0$ = concentration of diffused substance in the solid on the exposed side thereof
$x_0$ = thickness of the solid by establishing the following variables:
a) area of the solid
b) thickness of the solid
c) amount of foreign molecular substance that has penetrated.

**3.** Method according to claim 2, wherein the analysis of the amount of penetrated substance

$$S(t) = F \int_0^\infty c(x,t)\, dx$$

for sufficiently small diffusion times according to the relationship

$$S(t) = 2F\,c_0\sqrt{\frac{D \cdot t}{\pi}}$$

is obtained by establishing the variables $c_0 \cdot \sqrt{D}$ and $c_0$ to ascertain the variable $c_0 \cdot D$, where $c(x, t)$ is the position-dependent and time-dependent concentration of diffused substance.

4. Method according to any of claims 1 to 3, wherein $c_0 \cdot D$ is established by
   a) preparing an elementary area of the solid that can be regarded with sufficient accuracy as being of infinite thickness,
   b) bringing the area into contact with the foreign molecules,
   c) removing the foreign molecular matter from the surface after a predetermined time,
   d) washing out the substance that has diffused in, and
   e) establishing the amount of the substance that has diffused in.

5. Method according to any of claims 1 to 4, wherein $c_0$ is established by
   a) preparing an elementary area of the solid that is sufficiently thin as to be saturated with inward-diffused foreign molecules after a short diffusion time,
   b) bringing the area into contact with the foreign molecules,
   c) removing the foreign molecular matter from the surface after a predetermined time,
   d) washing out the substance that has diffused in and
   e) establishing the amount of the substance that has diffused in.

6. Method according to claims 4 and 5, wherein to establish the amount of the substance the foreign molecular substance is radioactively labelled and its activity is established after being washed out of the solid.

7. Method according to any of claims 1 to 6 for analysing the diffusion of fuel molecules into and through the walls of a fuel tank made of plastic, wherein the foreign molecules used are 14c-labelled petrol molecules.

8. Method according to any of claims 1 to 6 for establishing the parameters for diffusion in a dual-layer solid wetted on one side, the exposed first layer of which is distinctly thinner than the unexposed second layer and the foreign molecules having lower solubility in the first layer than in the second layer, by
   a) determining the diffusion constant of the second layer,
   b) calculating the concentration at the surface in the first layer,
   c) determining the thickness of the second layer
   using the formula

$$\frac{dn}{dt} = \frac{c_0^1 \cdot D_2}{L}$$

where
$\frac{dn}{dt}$ = diffusion current
$c_0^1$ = concentration at the surface of the first layer in the solid
$D_2$ = diffusion constant of second layer
$L$ = thickness of the second layer.

9. Method according to claim 8, wherein the concentration at the surface of the first layer is calculated by
   a) establishing the amount of the substance that has penetrated from the surface of the first layer,
   b) establishing the amount of the substance that has penetrated from the surface of the second layer,

c) calculating the concentration at the surface of the first layer using the formula

$$C_0^1 = \frac{C_0^2 \cdot S_1(t)}{S_2(t)}$$

where

$C_0^1$ = concentration at the surface of the first layer in the solid
$C_0^2$ = concentration at the surface of the second layer in the solid
$s_1(t)$ = amount of the substance that has penetrated at the surface of the first layer
$s_2(t)$ = amount of the substance that has penetrated at the surface of the second layer.

10. Use of the method according to claim 8 or 9 for analysing the diffusion of fuel molecules into and through the walls of a fuel tank made of plastic and coated on the inside, more particularly fluorinated or sulphonated, using 14c-labelled molecules of petrol constituents as the foreign molecules.

**Revendications**

1. Procédé de détermination des propriétés de perméation de molécules étrangères (20) dans des corps solides (10), dans lequel
   a) on rend possible, par un contact superficiel des molécules étrangères avec le corps solide, une pénétration des molécules étrangères,
   b) on choisit un temps t qui est dimensionné de sorte que les molécules étrangères ne diffusent à l'intérieur du corps solide que sur une distance x qui est nettement plus petite que l'épaisseur totale du corps solide,
   c) on interrompt le processus de diffusion au bout du temps t, et
   d) on ne détermine que la quantité des molécules étrangères qui a diffusé à l'intérieur.

2. Procédé selon la revendication 1 pour la détermination du courant de diffusion suivant la formule

$$\frac{dn}{dt} = \frac{-D.F.c_0}{x_0}$$

où

$\frac{dn}{dt}$ = Courant de diffusion
$D$ = Constante de diffusion
$F$ = Aire
$c_0$ = Concentration, dans le corps solide, de la substance diffusante présente du côté exposé du corps solide
$x_0$ = Epaisseur du corps solide, dans lequel on détermine les grandeurs suivantes:
   a) Aire du corps solide
   b) Epaisseur du corps solide
   c) Quantité de matière de la substance de molécules étrangères ayant pénétré.

3. Procédé selon la revendication 2, dans lequel la détermination de la quantité de matière de la substance ayant pénétré

$$S(t) = F \int_0^\infty c(x,t)\, dx$$

est effectuée, pour des temps de diffusion suffisamment petits, suivant la relation

$$S(t) = 2F\, c_o\, \sqrt{\frac{D \cdot t}{\pi}}$$

avec détermination des grandeurs $c_o \cdot \sqrt{D}$ et $c_o$ pour trouver la grandeur $c_o \cdot D$, $c(x,t)$ étant la concentration, en fonction du lieu et du temps, de la substance diffusante.

4. Procédé selon l'une quelconque des revendications 1 à 3, dans lequel la détermination de $c_o \cdot D$ est effectuée par

a) préparation d'un élément de surface du corps solide, qui peut être considéré, avec une exactitude suffisante, comme infiniment épais,
b) mise en contact de la surface avec les molécules étrangères,
c) enlèvement de la matière des molécules étrangères de la surface après un temps prédéfini,
d) extraction par lavage de la matière diffusée à l'intérieur, et
e) détermination de la quantité de matière diffusée à l'intérieur.

5. Procédé selon l'une quelconque des revendications 1 à 4, dans lequel la détermination de $c_o$ est effectuée par

a) préparation d'un élément de surface du corps solide qui est suffisamment mince pour qu'il se produise, après un bref temps de diffusion, une saturation par des molécules étrangères diffusées à l'intérieur,
b) mise en contact de la surface avec les molécules étrangères,
c) enlèvement de la matière des molécules étrangères de la surface après un temps prédéfini,
d) extraction par lavage de la matière diffusée à l'intérieur, et
e) détermination de la quantité de matière diffusée à l'intérieur.

6. Procédé selon la revendication 4 ou 5, dans lequel, pour la détermination de la quantité de matière, la substance des molécules étrangères est marquée radioactivement et l'activité est déterminée après l'extraction du corps solide par lavage.

7. Application du procédé selon l'une quelconque des revendications 1 à 6 pour la détermination de la diffusion de molécules de carburant dans et à travers la paroi d'un réservoir de carburant en matière plastique, des molécules d'essence marquées par $^{14}C$ étant utilisées comme molécules étrangères.

8. Procédé selon l'une quelconque des revendications 1 à 6 pour la détermination des paramètres de diffusion dans un corps solide à deux couches, mouillé d'un seul côté, la première couche exposée étant nettement plus mince que la seconde couche non exposée et les molécules étrangères ayant, dans la première couche, une solubilité plus faible que dans la seconde couche, par

a) détermination de la constante de diffusion de la seconde couche,
b) calcul de la concentration à la surface dans la première couche,
c) détermination de l'épaisseur de la seconde couche

suivant la formule

$$\frac{dn}{dt} = \frac{C_o^1 \cdot D_z}{L}$$

où

$\frac{dn}{dt}$ : Courant de diffusion
$C_o^1$ : Concentration, dans le corps solide, à la surface de la première couche
$D_2$ : Constante de diffusion de la seconde couche
$L$ : Epaisseur de la seconde couche.

9. Procédé selon la revendication 8, dans lequel la concentration à la surface de la première couche est calculée par

a) détermination de la quantité de matière ayant pénétré à partir de la surface de la première couche,

b) détermination de la quantité de matière ayant pénétré à partir de la surface de la seconde couche,

c) calcul de la concentration à la surface de la première couche suivant la formule

$$C_o{}^1 = \frac{C_o{}^2 \cdot S_1(t)}{S_2(t)}$$

où

$C_o{}^1$ = Concentration à la surface de la première couche dans le corps solide

$C_o{}^2$ = Concentration à la surface de la seconde couche dans le corps solide

$S_1(t)$ = Quantité ayant pénétré à la surface de la première couche

$S_2(t)$ = Quantité ayant pénétré à la surface de la seconde couche.

10. Application du procédé selon la revendication 8 ou 9 pour la détermination de la diffusion de molécules de carburant dans et à travers la paroi d'un réservoir de carburant en matière plastique revêtu intérieurement, en particulier fluoré ou sulfoné, des molécules de composants d'essence marquées par $^{14}C$ étant utilisées comme molécules étrangères.

FIG.1

FIG.2

$c(x,t)$

FIG.3